# EUROPEAN PATENT APPLICATION

(11) **EP 4 787 567 A1**
(43) Date of publication of application: **05.08.2026**
(21) Application number: 24869607.2
(22) Date of filing: 06.03.2024
(51) Int. Cl.: H01M 50/202, H01M 50/244

(54) **BATTERY CELL, POWER BATTERY AND VEHICLE**

(30) Priority: 27.09.2023 CN 202322664876 U; 27.09.2023 CN 202322650280 U
(71) Applicant: BYD Company Limited, Shenzhen, Guangdong 518118 (CN)
(72) Inventor: CHEN, Chong, Shenzhen, Guangdong 518118 (CN); WANG, Xinyue, Shenzhen, Guangdong 518118 (CN); YUAN, Wansong, Shenzhen, Guangdong 518118 (CN); HUANG, Jian, Shenzhen, Guangdong 518118 (CN)
(74) Representative: Mathys & Squire
(86) International application number: PCT/CN2024/080357
(87) International publication number: WO 2025/066036

(57) **Abstract**

Provided in the present application are a battery cell, a power battery and a vehicle. The battery cell comprises a battery cell surface, electrode cores and a protective film; the electrode cores are arranged within the battery cell surface, tabs inside the electrode cores extending out of the battery cell surface; the protective film coats the battery cell surface; the protective film is provided with first cuts and a plurality of second cuts, each first cut being in communication with a plurality of the second cuts; the first cuts extend in a first direction; each second cut extends in a second direction, the plurality of second cuts being successively spaced apart in the first direction, and the first direction being different from the second direction; the tabs pass through the first cuts so as to be exposed from the protective film; the protective film located on the two sides of each first cut in the second direction is in contact with the outer side walls of the tabs. The battery cell, the power battery and the vehicle provided in the present application can reduce impurities, such as foreign matters and dust, falling into battery cells, thereby improving the quality of finished products.

## Description

This application claims priorities to Chinese Patent Application No. 202322664876.3, filed with the China National Intellectual Property Administration on September 27, 2023 and entitled "BATTERY CELL, BATTERY MODULE, POWER BATTERY, AND VEHICLE" and Chinese Patent Application No. 202322650280.8, filed with the China National Intellectual Property Administration on September 27, 2023 and entitled "BATTERY CELL, POWER BATTERY, AND VEHICLE", which are incorporated herein by reference in their entireties.

### TECHNICAL FIELD

This application pertains to the field of battery technologies, and in particular, to a battery cell, a power battery, and a vehicle.

### BACKGROUND

With rapid development of the new energy vehicle industry, batteries, as one of main components of new energy vehicles, have entered automated production lines for production and assembly. An existing battery automation production process is roughly as follows: After a monopolar battery enters an assembly automation line, the monopolar battery is clamped by a fixture, and then is transferred and assembled with the fixture. Only the fixture provides a protective effect in an entire production process of the monopolar battery, and the fixture is of an open structure. Therefore, through the entire production and assembly process of the monopolar battery, impurities such as foreign matter and dust are likely to fall into the interior of the monopolar battery, thereby affecting quality of a finished product of the monopolar battery.

### SUMMARY

For deficiencies in a conventional technology, this application provides a battery cell, a power battery, and a vehicle that can reduce possibility of impurities such as foreign matter and dust falling into the interior of the battery cell, thereby improving quality of finished products of a battery cell, a power battery, and a vehicle.

According to one aspect, this application provides a battery cell, including:
an electrode core arranged within a battery cell surface, wherein a tab of the electrode core extends out of the battery cell surface; and
a protective film coating outside of the battery cell surface, wherein the protective film has a first cut and a plurality of second cuts, and the first cut is in communication with the plurality of second cuts; the first cut extends in a first direction, each second cut extends in a second direction, the plurality of second cuts are successively spaced apart in the first direction, and the first direction is different from the second direction; and the tab passes through the first cut so as to be exposed out of the protective film, and the protective film located on two sides of the first cut in the second direction is in contact with an outer side wall of the tab.

In a possible implementation, there is an included angle between the first direction and the second direction.

In a possible implementation, the protective film is an insulation film.

In a possible implementation, two opposite sides of the first cut in the second direction are in contact with each other.

In a possible implementation, two opposite sides of the first cut in the second direction are spaced apart from each other, and the plurality of second cuts are all arranged on a same side of the first cut in the second direction; and the tab passes through the first cut so as to be exposed out from the protective film, and the protective film located on two sides of the first cut in the second direction is in contact with the outer side wall of the tab.

In a possible implementation, the protective film can be elastically bent and can be reset under action of an elastic force of the protective film.

In a possible implementation, the protective film further has a third cut, the third cut is in communication with the first cut, the third cut extends in the first direction, and the protective film located on two sides of the third cut in the second direction is in contact with the outer side wall of the tab.

In a possible implementation, there are two third cuts, the two third cuts are both in communication with the first cut, the two third cuts both extend in the first direction, and the two third cuts are respectively arranged on two opposite sides of the first cut in the first direction.

In a possible implementation, the protective film further has a plurality of fourth cuts, each fourth cut extends in the second direction, and the plurality of second cuts are successively spaced apart in the first direction; the plurality of fourth cuts are all in communication with the first cut, and the plurality of fourth cuts and the plurality of second cuts are respectively arranged on two opposite sides of the first cut in the second direction.

In a possible implementation, the battery cell further includes an adhesive film, and the adhesive film is arranged between the battery cell surface and the protective film.

In a possible implementation, the protective film includes a first portion, a second portion, and a third portion that are successively connected in the second direction, at least a part of the first portion and at least a part of the third portion are overlapped at an end of the battery cell surface facing away from the tab; and the first portion has a first through hole, the third portion has a second through hole, and an orthographic projection of the first through hole on the end of the battery cell surface facing away from the tab is spaced apart from an orthographic projection of the second through hole on the end of the battery cell surface facing away from the tab.

In a possible implementation, the second portion includes a first side wall, a top wall, and a second side wall that are successively connected in the second direction, the first side wall and the second side wall coat two opposite side surfaces of the battery cell surface in the second direction, the top wall coats a top surface of the battery cell surface, and the first portion and the second portion coat a bottom surface of the battery cell surface.

In a possible implementation, the protective film further includes a fourth portion and a fifth portion that are arranged on two opposite sides of the second portion in the first direction, and the fourth portion and the fifth portion coat two opposite side surfaces of the battery cell surface in the first direction.

In a possible implementation, there are two fourth portions, wherein the two fourth portions are arranged opposite to each other in the second direction, one fourth portion is connected to one side of the first side wall, and the other fourth portion is connected to one side of the second side wall; wherein there are two fifth portions, the two fifth portions are arranged opposite to each other in the second direction, one fifth portion is connected to the other side of the first side wall, and the other fifth portion is connected to the other side of the second side wall; and one fourth portion and one fifth portion are configured to cover one side surface of the battery cell surface in the first direction, and the other fourth portion and the other fifth portion are configured to cover the other side surface of the battery cell surface in the first direction.

In a possible implementation, the protective film has one or more creases, and the one or more creases are configured to divide different portions of the protective film.

According to another aspect, this application further provides a power battery, including:
one or more battery cells described above.

In a possible implementation, the power battery further includes:
a fixing structure, wherein the fixing structure is configured to fix the plurality of battery cells.

According to yet another aspect, this application further provides a vehicle, including:
the foregoing power battery, wherein the power battery is configured to provide electrical energy for the vehicle.

In the battery cell, the power battery, and the vehicle that are provided in this application, the protective film coats the battery cell surface to reduce possibility that impurities such as foreign matter and dust in an environment enter an interior of the battery cell, thereby helping ensure cleanliness of the battery cell during a machining process, and further improving quality of a finished product that the battery cell is machined into. Furthermore, the protective film has the first cut and the plurality of second cuts, the first cut extending in the first direction, each second cut extending in the second direction, the plurality of second cuts being successively spaced apart in the first direction, and the first direction being different from the second direction. Therefore, after the tab passes through the first cut so as to be exposed out from the protective film, the protective film located on two sides of the first cut in the second direction is lapped with the outer side wall of the tab, so as to seal the battery cell surface and the tab that are located in an interior of the protective film. This can reduce the possibility that impurities such as foreign matter and dust in the environment enter the interior of the battery cell from the first cut, thereby further improving cleanliness of the battery cell during the machining process, and improving quality of finished product that the battery cell is machined into.

### BRIEF DESCRIPTION OF DRAWINGS

To describe technical solutions in the embodiments of this application more clearly, the following briefly describes the accompanying drawings that need to be used in the embodiments. Clearly, the accompanying drawings in the following description are merely some implementations provided in the embodiments of this application. For a person of ordinary skill in the art, other accompanying drawings can be obtained based on these accompanying drawings without paying any creative work.
FIG. 1 is a structural diagram 1 of a power battery according to an embodiment of this application;
FIG. 2 is a structural diagram 2 of a power battery according to an embodiment of this application;
FIG. 3 is a structural diagram 1 of a battery cell according to a first embodiment of this application;
FIG. 4 is a structural diagram 2 of a battery cell according to a first embodiment of this application;
FIG. 5 is a structural diagram 3 of a battery cell according to a first embodiment of this application;
FIG. 6 is a structural diagram 4 of a battery cell according to a first embodiment of this application;
FIG. 7 is a front view of a protective film according to a first embodiment of this application;
FIG. 8 is a partially enlarged schematic diagram of the protective film shown in FIG. 7 at region A;
FIG. 9 is a front view of a protective film according to a second embodiment of this application;
FIG. 10 is a partially enlarged schematic diagram of the protective film shown in FIG. 9 at region B;
FIG. 11 is a front view of a protective film according to a third embodiment of this application;
FIG. 12 is a partially enlarged schematic diagram of the protective film shown in FIG. 11 at region C;
FIG. 13 is a front view of a protective film according to a fourth embodiment of this application; and
FIG. 14 is a partially enlarged schematic diagram of the protective film shown in FIG. 13 at region D.

Description of reference numerals is as follows:
Power battery - 1000; Fixing structure - 200; Battery cell - 100; Battery cell surface - 10; Adhesive film - 20; Electrode core - 30; Protective film - 50; Tab - 31; First cut - 51; Second cut - 52; Third cut - 53; Fourth cut - 54; First portion - 501; Second portion - 502; Third portion - 503; Fourth portion - 504; Fifth portion - 505; Crease - 506; First through hole - 5010; Second through hole - 5030; First side wall - 5021; Top wall - 5022; and Second side wall - 5023.

### DESCRIPTION OF EMBODIMENTS

The following clearly and completely describes the technical solutions of this application with reference to the accompanying drawings in the embodiments of this application. Clearly, the described implementations are merely some implementations but not all the implementations of this application. Based on the implementations in this application, all other implementations obtained by a person of ordinary skill in the art without creative efforts shall fall within the protection scope of this application.

An embodiment of this application provides a vehicle. The vehicle includes a power battery, and the power battery serves as a power source of the vehicle and is configured to provide electrical energy for the vehicle. It will be understood that the vehicle provided in this application includes but is not limited to a vehicle such as an electric motorcycle, an electric vehicle, or a hybrid electric vehicle, or may be another electric device, such as construction machinery or a medical device. This is not limited in this application. In this embodiment, an automobile is used as an example, and the vehicle further includes other structures other than a power battery, such as a frame, an engine, and a wheel. Because this application mainly improves the power battery, other structures other than the power battery are not described herein in detail.

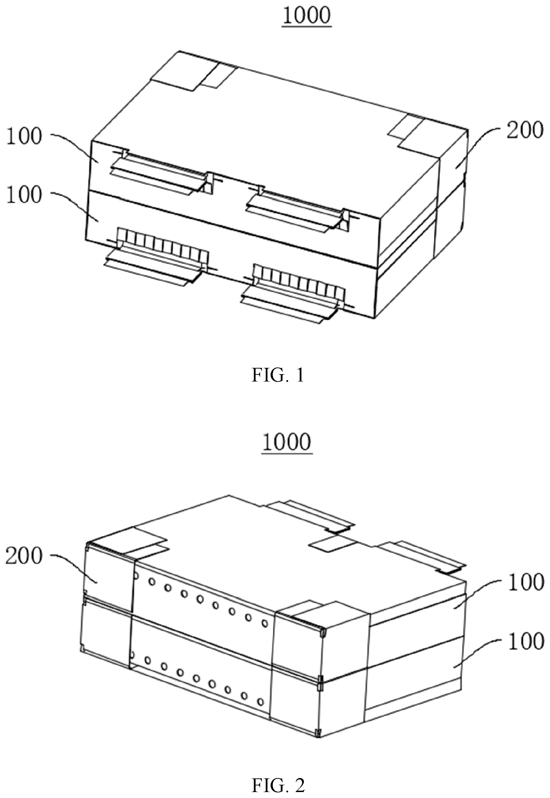

Referring to FIG. 1 and FIG. 2, FIG. 1 is a structural diagram 1 of a power battery according to an embodiment of this application, and FIG. 2 is a structural diagram 2 of a power battery according to an embodiment of this application.

An embodiment of this application provides a power battery 1000, and the power battery 1000 includes a battery cell 100. It will be understood that the power battery 1000 may include one, two, three, or more battery cells, which is not limited in this application. When there are a plurality of battery cells 100, the power battery 1000 further includes a fixing structure 200, and the fixing structure 200 is configured to fix the plurality of battery cells 100 to form a whole.

Quality of the battery cell 100 determines quality of the power battery 1000 and the vehicle. Therefore, this application provides a battery cell 100, which can reduce possibility of impurities such as foreign matter and dust falling into an interior of the battery cell 100, thereby improving quality of finished products of the battery cell 100, the power battery 1000, and the vehicle.

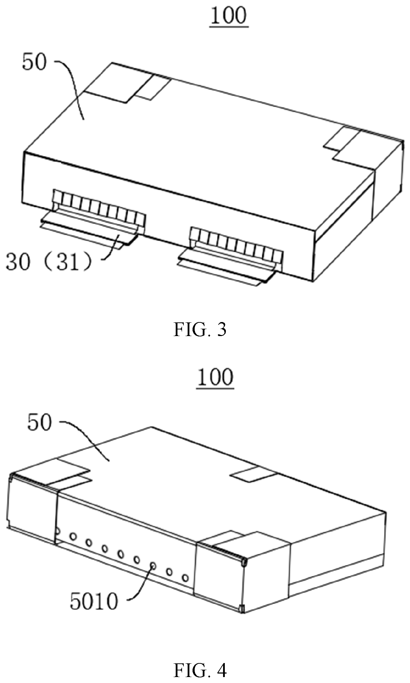

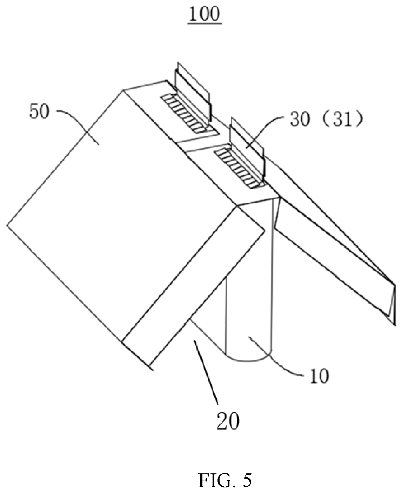

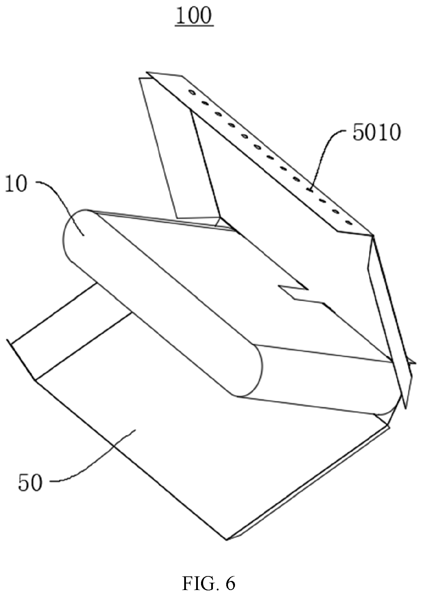

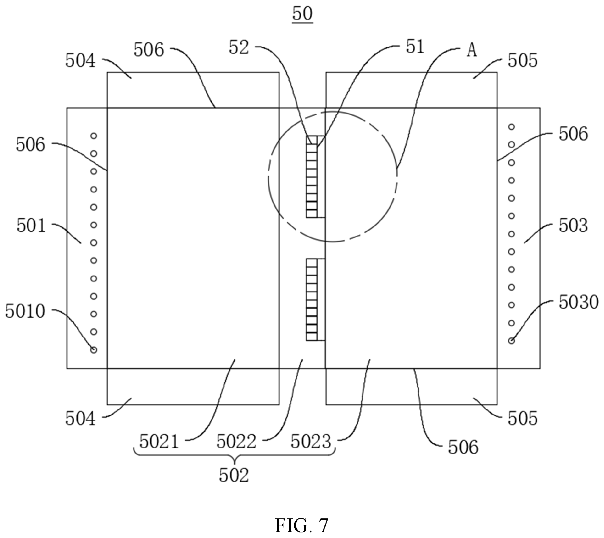

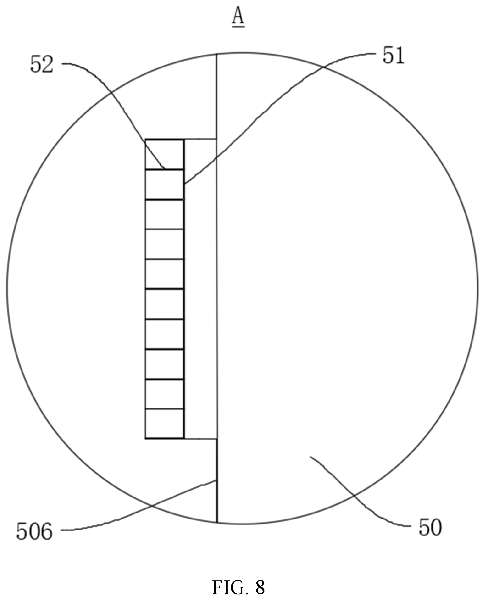

Referring to FIG. 3 to FIG. 8, FIG. 3 is a structural diagram 1 of a battery cell according to a first embodiment of this application, FIG. 4 is a structural diagram 2 of a battery cell according to a first embodiment of this application, FIG. 5 is a structural diagram 3 of a battery cell according to a first embodiment of this application, FIG. 6 is a structural diagram 4 of a battery cell according to a first embodiment of this application, FIG. 7 is a front view of a protective film according to a first embodiment of this application, and FIG. 8 is a partially enlarged schematic diagram of the protective film shown in FIG. 7 at region A.

The first embodiment of this application provides a battery cell 100. The battery cell 100 includes a battery cell surface 10, an electrode core 30, and a protective film 50. The electrode core 30 is arranged within the battery cell surface 10. A tab 31 of the electrode core 30 is exposed out of the battery cell surface 10. The protective film 50 coats the battery cell surface 10. The tab 31 of the electrode core 30 is exposed out from the protective film 50.

The protective film 50 is provided with a first cut 51 and a plurality of second cuts 52, and the first cut 51 is in communication with the plurality of second cuts 52. The first cut 51 extends in a first direction, each second cut 52 extends in a second direction, the plurality of second cuts 52 are successively spaced apart in the first direction, and the first direction is different from the second direction. When the protective film 50 coats the battery cell surface 10 from an end at which the tab 31 of the battery cell 100 is exposed, the tab 31 passes through the first cut 51 so as to be exposed out from the protective film 50. The protective film 50 located on two sides of the first cut 51 in the second direction is in contact with an outer side wall of the tab 31. In this case, the protective film 50 coats the battery cell surface 10 and a position of the battery cell surface 10 that is connected to the tab 31.

Specifically, in this embodiment, the first direction is different from the second direction, for example, the first direction is perpendicular to the second direction. It will be understood that, in some other embodiments, the first direction and the second direction may not be perpendicular, provided that there is an included angle between the first direction and the second direction, which is not limited in this application.

It will be understood that, to prevent flow of an electrical signal between the protective film 50 and the battery cell 100, the protective film 50 provided in this embodiment is an insulation film, and a material of the protective film 50 includes but is not limited to one or a combination of polyimide, polyethylene, polyvinylidene fluoride, and polytetrafluoroethylene.

It will be understood that, before the tab 31 has passed through the first cut 51, protective films 50 located on peripheral edges of both the first cut 51 and the second cut 52 are located in the same plane. In a process in which the tab 31 passes through the first cut 51, the tab 31 abuts against the protective film 50 and causes the protective films 50 located on the peripheral edges of both the first cut 51 and the second cut 52 to be elastically bent, and the protective films 50 located on the peripheral edges of both the first cut 51 and the second cut 52 can be elastically attached to a peripheral side wall surface of the tab 31, which can reduce possibility that impurities such as foreign matter and dust in the environment enter the interior of the battery cell 100. After the tab 31 is removed from the first cut 51, the protective film 50 is reset under action of an elastic force of the protective film 50, and the protective films 50 located on the peripheral edges of both the first cut 51 and the second cut 52 are located in the same plane.

In the battery cell 100, the power battery 1000, and the vehicle that are provided in this application, the protective film 50 coats the battery cell surface 10 to reduce possibility that impurities such as foreign matter and dust in an environment enter the interior of the battery cell 100, thereby helping ensure cleanliness of the battery cell 100 during a machining process, and further improving the quality of a finished product that the battery cell 100 and the power battery are machined into. Furthermore, the protective film 50 has the first cut 51 and the plurality of second cuts 52, the first cut 51 extends in the first direction, each second cut 52 extends in the second direction, the plurality of second cuts 52 are successively spaced apart in the first direction, and the first direction is different from the second direction. Therefore, after the tab 31 passes through the first cut 51 so as to be exposed out of the protective film 50, the protective film 50 located on two sides of the first cut 51 in the second direction is lapped with the outer side wall of the tab 31, so as to seal the battery cell surface 10 and the tab 31 that are located in an interior of the protective film 50. This can reduce possibility that impurities such as foreign matter and dust in the environment enter the interior of the battery cell 100 from the first cut 51, thereby further improving cleanliness of the battery cell 100 during the machining process, and improving quality of a finished product that the battery cell 100 is machined into.

It will be understood that, in the battery cell 100 provided in this embodiment, the protective film 50 covers the battery cell surface 10 of the battery cell 100 from an end of the battery cell 100 provided with the tab 31. In this way, impurities such as foreign matter and dust in the environment can be prevented from falling onto a surface of the protective film 50 in contact with the battery cell surface 10, thereby improving cleanliness of the battery cell 100 during the machining process, and improving quality of a finished product that the battery cell 100 is machined into.

In the first embodiment of this application, two opposite sides of the first cut 51 in the second direction are in contact with each other. In other words, before the tab 31 has passed through the first cut 51, protective films 50 on two opposite sides of the first cut 51 in the second direction are attached to each other. In this way, impurities such as foreign matter and dust can be prevented from entering the interior of the battery cell 100 through the first cut 51 before the protective film 50 covers the battery cell surface 10 assembled to the battery cell 100, which helps improve cleanliness of the battery cell 100 during the machining process, and improves quality of a finished product that the battery cell 100 is machined into.

In the first embodiment of this application, the battery cell 100 further includes an adhesive film 20, and the adhesive film 20 is arranged between the battery cell surface 10 and the protective film 50. Through provision of the adhesive film 20, strength of the protective film 50 coating outside of the battery cell surface 10 of the battery cell 100 is improved, which can reduce the risk of the protective film 50 falling off from the battery cell 100.

In the first embodiment of this application, the protective film 50 includes a first portion 501, a second portion 502, and a second portion 502 that are successively connected in the second direction. When the protective film 50 coats the battery cell surface 10 of the battery cell 100, at least a part of the first portion 501 and at least a part of the third portion 503 are overlapped at an end of the battery cell surface 10 facing away from the tab 31. The first portion 501 has a first through hole 5010, the third portion 503 has a second through hole 5030, and an orthographic projection of the first through hole 5010 on the end of the battery cell surface 10 facing away from the tab 31 is spaced apart from an orthographic projection of the second through hole 5030 on the end of the battery cell surface 10 facing away from the tab 31. The first through hole 5010 is farther away from the battery cell surface 10 of the battery cell 100 than the second through hole 5030. In this way, the first through hole 5010 and the second through hole 5030 are staggered, so that a bottom of the battery cell surface 10 is completely covered by the first portion 501 and the third portion 503 that are of the protective film 50, and a bottom surface of the battery cell surface 10 is not exposed out of the outside of the protective film 50, thereby helping improve insulation and sealing effects of the protective film 50 on the battery cell surface 10 of the battery cell 100. In addition, the first through hole 5010 and the second through hole 5030 are staggered, and an electrolytic solution in the battery cell surface 10 is less likely to flow out from the first through hole 5010 and the second through hole 5030, which can prevent leakage of the electrolytic solution and thus improve quality of a finished product of the battery cell 100.

It will be understood that opening shapes of the first through hole 5010 and the second through hole 5030 may be a circle, a polygon, an ellipse, or the like, which is not limited in this application.

In the first embodiment of this application, the second portion 502 includes a first side wall 5021, a top wall 5022, and a second side wall 5023 that are successively connected in the second direction, the first side wall 5021 and the second side wall 5023 coat two opposite side surfaces of the battery cell surface 10 in the second direction, the top wall 5022 coats a top surface of the battery cell surface 10, and the first portion 501 and the second portion 502 coat a bottom surface of the battery cell surface 10. The protective film 50 further includes a fourth portion 504 and a fifth portion 505 that are arranged on two opposite sides of the second portion 502 in the first direction, and the fourth portion 504 and the fifth portion 505 coat two opposite side surfaces of the battery cell surface 10 in the first direction. There are two fourth portions 504, the two fourth portions 504 are spaced apart in the second direction, one fourth portion 504 is connected to one side of the first side wall 5021, and the other fourth portion 504 is connected to one side of the second side wall 5023. There are two fifth portions 505, the two fifth portions 505 are spaced apart in the second direction, one fifth portion 505 is connected to the other side of the first side wall 5021, and the other fifth portion 505 is connected to the other side of the second side wall 5023. One fourth portion 504 and one fifth portion 505 are configured to cover one side surface of the battery cell surface 10 in the first direction, and the other fourth portion 504 and the other fifth portion 505 are configured to cover the other side surface of the battery cell surface 10 in the first direction. The first portion 501, the second portion 502, the third portion 503, the fourth portion 504, and the fifth portion 505 coat the outside of the battery cell surface 10 of the battery cell 100, so that impurities such as foreign matter and dust can be prevented from entering the interior of the battery cell 100, thereby avoiding affecting quality of a finished product of the battery cell 100.

In order to facilitate that different portions of the protective film 50 respectively correspond to different side surfaces of the battery cell surface 10 to enable the protective film 50 to be tightly attached to a surface of the battery cell surface 10, a plurality of creases 506 are provided on the protective film 50. In this embodiment, there is a crease 506 between the first portion 501 and the first side wall 5021, there is a crease 506 between the first side wall 5021 and the top wall 5022, there is a crease 506 between the top wall 5022 and the second side wall 5023, there is a crease 506 between the second side wall 5023 and the third portion 503, there is a crease 506 between one fourth portion 504 and the first side wall 5021, there is a crease 506 between the other fourth portion 504 and the second side wall 5023, there is a crease 506 between one fifth portion 505 and the first side wall 5021, and there is a crease 506 between the other fifth portion 505 and the second side wall 5023.

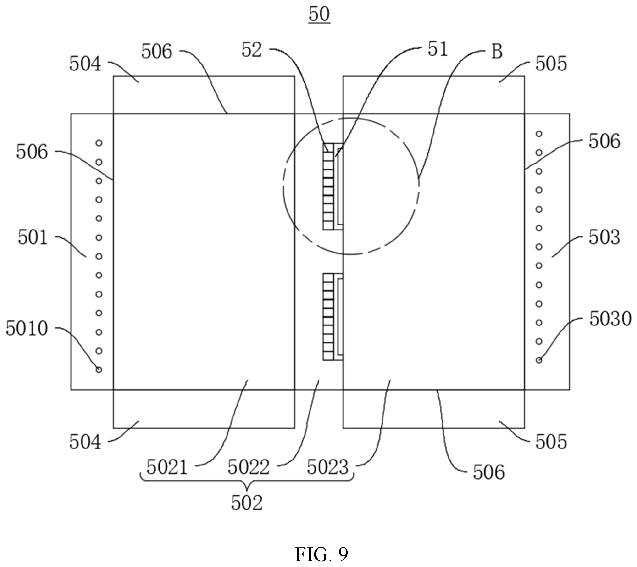

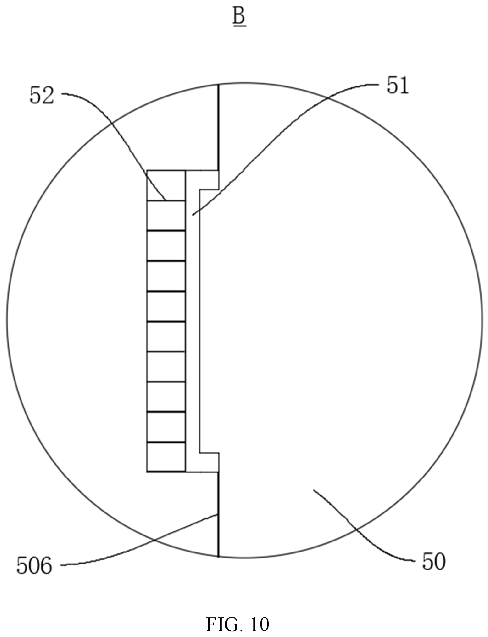

Referring to FIG. 9 and FIG. 10, FIG. 9 is a front view of a protective film according to a second embodiment of this application, and FIG. 10 is a partially enlarged schematic diagram of the protective film shown in FIG. 9 at region B.

The battery cell 100 provided in the second embodiment of this application is substantially the same as the battery cell 100 provided in the first embodiment of this application, and a difference therebetween is that the first cut 51 in the battery cell 100 provided in the second embodiment of this application is different from the first cut 51 located on the protective film 50 in the battery cell 100 provided in the first embodiment of this application.

Two opposite sides of the first cut 51 provided in the second embodiment of this application in the second direction are spaced apart from each other, and the plurality of second cuts 52 are all arranged on the same side of the first cut 51 in the second direction. The tab 31 passes through the first cut 51 so as to be exposed out from the protective film 50. The protective film 50 located on two sides of the first cut 51 in the second direction is in contact with the outer side wall of the tab 31. In this way, because two opposite sides of the first cut 51 in the second direction are spaced apart from each other, it is convenient for the tab 31 to pass through the protective film 50, thereby making it convenient for the protective film 50 to cover the outside of the battery cell surface 10.

It will be understood that an opening shape of the first cut 51 includes but is not limited to a long rectangle, a circular ring, a semi-I-shape, or the like. To be specific, the opening shape of the first cut 51 may be determined based on a shape of the tab 31 of the electrode core 30, which is not limited in this application.

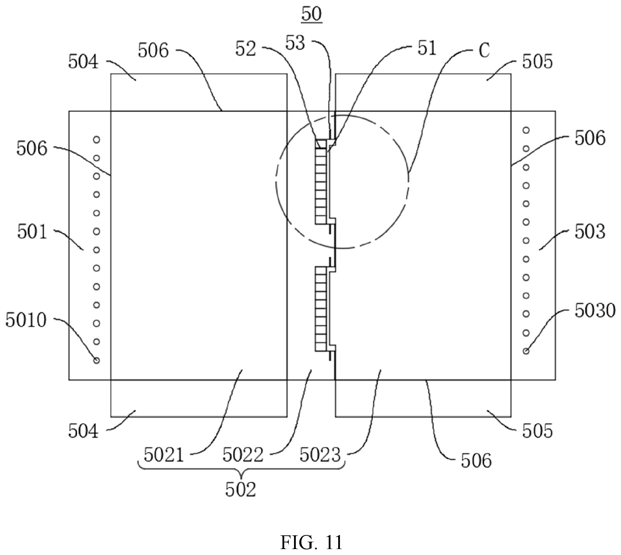

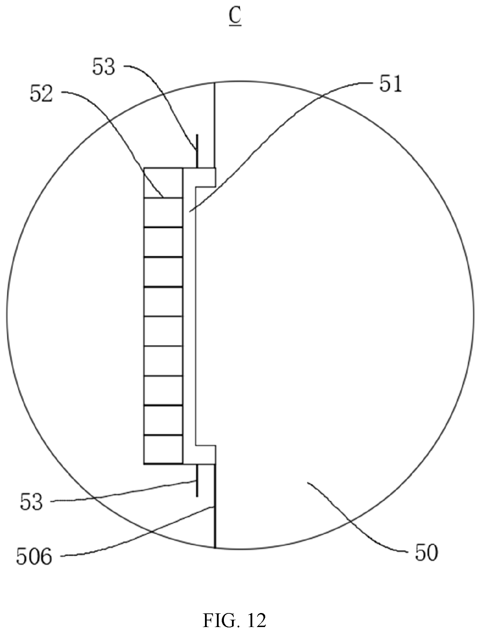

Referring to FIG. 11 and FIG. 12, FIG. 11 is a front view of a protective film according to a third embodiment of this application, and FIG. 12 is a partially enlarged schematic diagram of the protective film shown in FIG. 11 at region C.

The battery cell 100 provided in the third embodiment of this application is substantially the same as the battery cell 100 provided in the second embodiment of this application, and a difference therebetween is that in the battery cell 100 provided in the third embodiment of this application compared with the battery cell 100 provided in the second embodiment of this application, a third cut 53 is added to the protective film 50.

In the battery cell 100 provided in the third embodiment of this application, the third cut 53 is added on the basis of the battery cell 100 provided in the second embodiment of this application. To be specific, the protective film 50 further has a third cut 53, the third cut 53 is in communication with the first cut 51, the third cut 53 extends in the first direction, the protective film 50 located on two sides of the first cut 51 in the second direction is in contact with the outer side wall of the tab 31, and the protective film 50 located on two sides of the third cut 53 in the second direction is also in contact with the outer side wall of the tab 31. In this way, due to arrangement of the third cut 53, when a size of the tab 31 is slightly greater than a size of the first cut 51 in the first direction, the tab 31 can pass through the third cut 53 so as to be exposed out from the outside of the protective film 50, thereby helping improve compatibility of the protective film 50 with a battery cell 100 having a tab 31 of a different size. In addition, through arrangement of the third cut 53, the protective film 50 on two sides of the third cut 53 in the second direction can be in contact with the outer side wall of the tab 31, which helps further improve cleanliness of the battery cell 100 during the machining process, and improve quality of a finished product that the battery cell 100 is machined into.

It will be understood that, before the tab 31 has passed through the first cut 51, protective films 50 located on peripheral edges of the first cut 51, the second cut 52, and the third cut 53 are located in the same plane. In a process in which the tab 31 passes through the first cut 51, the tab 31 abuts against the protective film 50 and causes the protective films 50 located on the peripheral edges of the first cut 51, the second cut 52, and the third cut 53 to be elastically bent, and the protective films 50 located on the peripheral edges of the first cut 51, the second cut 52, and the third cut 53 can be elastically attached to a peripheral side wall surface of the tab 31, which can reduce possibility that impurities such as foreign matter and dust in the environment enter the interior of the battery cell 100. After the tab 31 is removed from the first cut 51, the protective film 50 is reset under action of an elastic force of the protective film 50, and the protective films 50 located on the peripheral edges of the first cut 51, the second cut 52, and the third cut 53 are located in the same plane.

Furthermore, in the battery cell 100 provided in the third embodiment of this application, there are two third cuts 53, the two third cuts 53 are both in communication with the first cut 51, the two third cuts 53 both extend in the first direction, and the two third cuts 53 are respectively arranged on two opposite sides of the first cut 51 in the first direction. In this way, through arrangement of the two third cuts 53, when the size of the tab 31 is slightly greater than the size of the first cut 51 in the first direction, the tab 31 can pass through the third cut 53 so as to be exposed out from the outside of the protective film 50, thereby helping further improve compatibility of the protective film 50 with a battery cell 100 having a tab 31 of a different size. In addition, through arrangement of the third cut 53, the protective film 50 on two sides of the third cut 53 in the second direction can be in contact with the outer side wall of the tab 31, which helps further improve cleanliness of the battery cell 100 during the machining process, and improve quality of a finished product that the battery cell 100 is machined into.

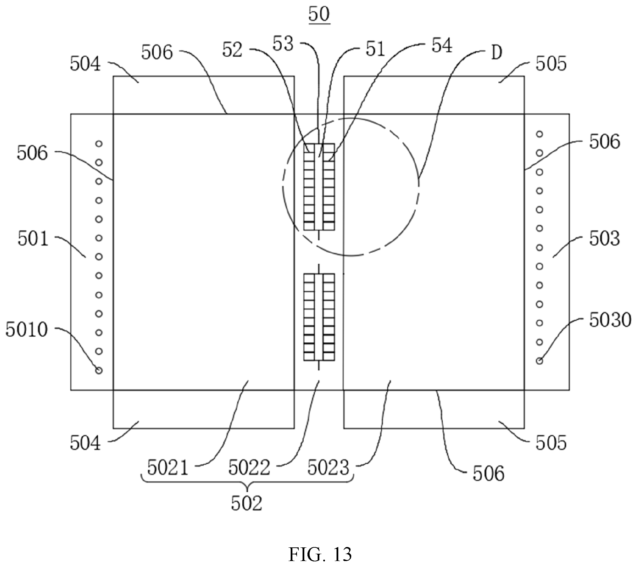

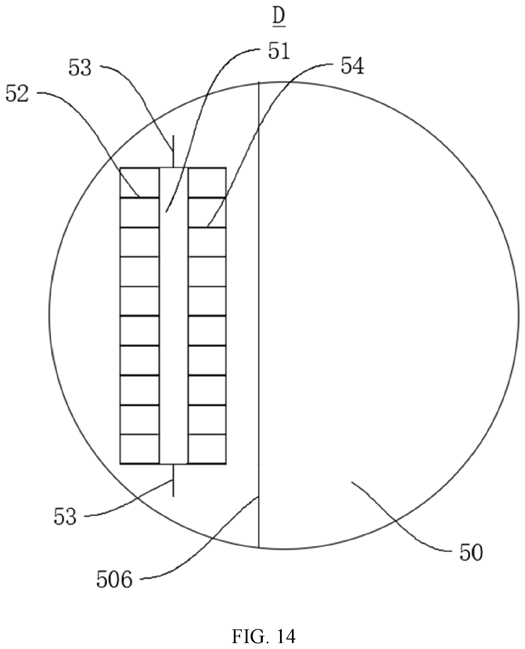

Referring to FIG. 13 and FIG. 14, FIG. 13 is a front view of a protective film according to a fourth embodiment of this application, and FIG. 14 is a partially enlarged schematic diagram of the protective film shown in FIG. 13 at region D.

The battery cell 100 provided in the fourth embodiment of this application is substantially the same as the battery cell 100 provided in the third embodiment of this application, and a difference therebetween is that in the battery cell 100 provided in the fourth embodiment of this application compared with the battery cell 100 provided in the third embodiment of this application, a fourth cut 54 is added.

In the battery cell 100 provided in the fourth embodiment of this application, the fourth cut 54 is added on a basis of the battery cell 100 provided in the third embodiment of this application. To be specific, the protective film 50 further has a plurality of fourth cuts 54, each fourth cut 54 extends in the second direction, and the plurality of second cuts 52 are successively spaced apart in the first direction. The plurality of fourth cuts 54 are all in communication with the first cut 51, and the plurality of fourth cuts 54 and the plurality of second cuts 52 are respectively arranged on two opposite sides of the first cut 51 in the second direction. In this way, due to arrangement of the fourth cut 54, when the size of the tab 31 is slightly greater than the size of the first cut 51 in the second direction, the tab 31 can pass through the fourth cut 54 so as to be exposed out from the outside of the protective film 50, thereby helping improve compatibility of the protective film 50 with a battery cell 100 having a tab 31 of a different size.

It will be understood that, before the tab 31 has passed through the first cut 51, protective films 50 located on peripheral edges of the first cut 51, the second cut 52, the third cut 53, and the fourth cut 54 are located in the same plane. In a process in which the tab 31 passes through the first cut 51, the tab 31 abuts against the protective film 50 and causes the protective films 50 located on the peripheral edges of the first cut 51, the second cut 52, the third cut 53, and the fourth cut 54 to be elastically bent, and the protective films 50 located on the peripheral edges of the first cut 51, the second cut 52, the third cut 53, and the fourth cut 54 can be elastically attached to a peripheral side wall surface of the tab 31, which can reduce possibility that impurities such as foreign matter and dust in the environment enter the interior of the battery cell 100. After the tab 31 is removed from the first cut 51, the protective film 50 is reset under action of an elastic force of the protective film 50, and the protective films 50 located on the peripheral edges of the first cut 51, the second cut 52, the third cut 53, and the fourth cut 54 are located in the same plane.

The foregoing are some implementations of this application. It will be noted that a person of ordinary skill in the art may also make some improvements and modifications without departing from the principle of this application, and these improvements and modifications are also considered to be within the protection scope of this application.

## Claims

1. A battery cell (100), comprising:
an electrode core (30) arranged within a battery cell surface (10), wherein a tab (31) of the electrode core (30) extends out of the battery cell surface (10); and
a protective film (50) coating outside of the battery cell surface (10), wherein the protective film (50) has a first cut (51) and a plurality of second cuts (52), and the first cut (51) is in communication with the plurality of second cuts (52); the first cut (51) extends in a first direction, each of the second cuts (52) extends in a second direction, the plurality of second cuts (52) are successively spaced apart in the first direction, and the first direction is different from the second direction; and the tab (31) passes through the first cut (51) and be exposed out from the protective film (50), and the protective film (50) located on two sides of the first cut (51) in the second direction is in contact with an outer side wall of the tab (31).

2. The battery cell (100) according to claim 1, wherein
there is an included angle between the first direction and the second direction.

3. The battery cell (100) according to claim 1 or 2, wherein
the protective film (50) is an insulation film.

4. The battery cell (100) according to any one of claims 1 to 3, wherein
two opposite sides of the first cut (51) in the second direction are in contact with each other.

5. The battery cell (100) according to any one of claims 1 to 3, wherein
two opposite sides of the first cut (51) in the second direction are spaced apart from each other, and the plurality of second cuts (52) are all arranged on a same side of the first cut (51) in the second direction; and the tab (31) passes through the first cut (51) so as to be exposed out from the protective film (50), and the protective film (50) located on two sides of the first cut (51) in the second direction is in contact with the outer side wall of the tab (31).

6. The battery cell (100) according to any one of claims 1 to 5, wherein
the protective film (50) is configured to be elastically bent and is configured to be reset under action of an elastic force of the protective film (50).

7. The battery cell (100) according to any one of claims 1 to 6, wherein
the protective film (50) further has a third cut (53), the third cut (53) is in communication with the first cut (51), the third cut (53) extends in the first direction, and the protective film (50) located on two sides of the third cut (53) in the second direction is in contact with the outer side wall of the tab (31).

8. The battery cell (100) according to claim 7, wherein
there are two third cuts (53), the two third cuts (53) are both in communication with the first cut (51), the two third cuts (53) both extend in the first direction, and the two third cuts (53) are respectively arranged on two opposite sides of the first cut (51) in the first direction.

9. The battery cell (100) according to any one of claims 1 to 8, wherein
the protective film (50) further has a plurality of fourth cuts (54), each of the fourth cuts (54) extends in the second direction, and the plurality of second cuts (52) are successively spaced apart in the first direction; the plurality of fourth cuts (54) are all in communication with the first cut (51), and the plurality of fourth cuts (54) and the plurality of second cuts (52) are respectively arranged on two opposite sides of the first cut (51) in the second direction.

10. The battery cell (100) according to any one of claims 1 to 9, wherein
the battery cell (100) further comprises an adhesive film (20), and the adhesive film (20) is arranged between the battery cell surface (10) and the protective film (50).

11. The battery cell (100) according to any one of claims 1 to 10, wherein
the protective film (50) comprises a first portion (501), a second portion (502), and a third portion (503) that are successively connected in the second direction, at least a part of the first portion (501) and at least a part of the third portion (503) are overlapped at an end of the battery cell surface (10) facing away from the tab (31); and the first portion (501) has a first through hole (5010), the third portion (503) has a second through hole (5030), and an orthographic projection of the first through hole (5010) on the end of the battery cell surface (10) facing away from the tab (31) is spaced apart from an orthographic projection of the second through hole (5030) on the end of the battery cell surface (10) facing away from the tab (31).

12. The battery cell (100) according to claim 11, wherein
the second portion (502) comprises a first side wall (5021), a top wall (5022), and a second side wall (5023) that are successively connected in the second direction, the first side wall (5021) and the second side wall (5023) coat two opposite side surfaces of the battery cell surface (10) in the second direction, the top wall (5022) coats a top surface of the battery cell surface (10), and the first portion (501) and the second portion (502) coat a bottom surface of the battery cell surface (10).

13. The battery cell (100) according to claim 11 or 12, wherein
the protective film (50) further comprises a fourth portion (504) and a fifth portion (505) that are arranged on two opposite sides of the second portion (502) in the first direction, and the fourth portion (504) and the fifth portion (505) coat two opposite side surfaces of the battery cell surface (10) in the first direction.

14. The battery cell (100) according to claim 13, wherein
there are two fourth portions (504), the two fourth portions (504) are arranged opposite to each other in the second direction, one fourth portion (504) is connected to one side of the first side wall (5021), and the other fourth portion (504) is connected to one side of the second side wall (5023); there are two fifth portions (505), the two fifth portions (505) are arranged opposite to each other in the second direction, one fifth portion (505) is connected to the other side of the first side wall (5021), and the other fifth portion (505) is connected to the other side of the second side wall (5023); and one fourth portion (504) and one fifth portion (505) are configured to cover one side surface of the battery cell surface (10) in the first direction, and the other fourth portion (504) and the other fifth portion (505) are configured to cover the other side surface of the battery cell surface (10) in the first direction.

15. The battery cell (100) according to any one of claims 11 to 14, wherein
the protective film (50) has one or more creases (506), and the one or more creases (506) are configured to divide different portions of the protective film (50).

16. A power battery (1000), comprising:
one or more battery cells (100) according to any one of claims 1 to 15.

17. The power battery (1000) according to claim 16, further comprising:
a fixing structure (200), wherein the fixing structure (200) is configured to fix the plurality of battery cells (100).

18. A vehicle, comprising:
the power battery (1000) according to claim 16 or 17, wherein the power battery (1000) is configured to provide electrical energy for the vehicle.
